# EUROPEAN PATENT SPECIFICATION

(11) **EP 2 959 063 B1**
(45) Date of publication and mention of the grant of the patent: **03.05.2017**
(21) Application number: 14714360.6
(22) Date of filing: 19.02.2014
(51) Int. Cl.: C09K 17/00, E02D 5/46, E02D 3/12

(54) **DEVICE, EQUIPMENT AND METHOD FOR TREATING GROUND, CONSTRUCTIONS AND THE LIKE BY GROUTING**
VORRICHTUNG, AUSRÜSTUNG UND VERFAHREN ZUR BEHANDLUNG VON BODEN, KONSTRUKTIONEN UND DERGLEICHEN DURCH VERPRESSEN
DISPOSITIF, ÉQUIPEMENT ET PROCÉDÉ DE TRAITEMENT DE SOL, DE CONSTRUCTIONS ET SIMILAIRES PAR JOINTOIEMENT

(30) Priority: 19.02.2013 IT BO20130070
(43) Date of publication of application: 30.12.2015
(73) Proprietor: Società Consolidamenti E Fondazioni S.r.l., 00193 Roma (IT)
(72) Inventor: BONOMI, Cristiano, I-20068 Peschiera Borromeo (Milano) (IT)
(74) Representative: Provvisionato, Paolo
(86) International application number: PCT/IB2014/059088
(87) International publication number: WO 2014/128618

(56) References cited:
- US-A1- 2010 006 168

## Description

This invention relates to the treatment of ground, structures and the like by grouting.

For example, the invention relates to the consolidation of predominantly unconsolidated or loose ground. The invention may also be used for the treatment of rock and other substrates, as well as structures such as masonry and similar works.

By treatment is meant for example consolidation and/or waterproofing of the material being treated, and more generally improvement of the geomechanical or physical properties of the material treated. Cementitious or chemical mixtures which can be used to consolidate and/or waterproof the material being treated are used for the treatments.

For the purposes of simplicity, in the rest of this description specific reference will be made to the consolidation of ground using cementitious mixtures, without this nevertheless restricting the general application of the invention, which may find application for any treatment in any material requiring treatment within the scope of the sectors of the art mentioned above. In particular the invention should not be understood to be restricted merely to the consolidation of ground by means of cementitious mixtures, but may also find application in the consolidation and/or waterproofing of materials and substrates of various kinds, for example rock or structures, using cementitious or chemical mixtures which are suitable for improving the geomechanical or physical properties of the material treated. Applications of the invention in contexts other than the specific consolidation of ground will be obvious to a person skilled in the art reading and understanding this description.

One known art for consolidating unconsolidated ground is that of using "sleeve pipes" inserted in holes made in the ground distributed according to geometries which are decided upon at the design stage and which typically provide for a spacing between adjacent holes of the order of not more than approximately one or two metres. The density of sleeve pipes per unit surface area is therefore rather high, and so as a consequence are the corresponding costs for equipment and labour required for consolidation work.

The sleeve pipes normally used comprise a tubular pipe, which may comprise several sections which can be joined together, the typical length of which may vary from a few metres to a few tens of metres. A number of radial holes covered with an elastic sleeve acting as a non-return valve are then provided in succession along the length of this tubular conduit. The pipe is used after the ground has been drilled. Before starting grouting proper, the annular cavity between the sleeve pipe and the wall of the hole is filled with a cementitious mixture, forming a kind of sheath, to prevent the mixture which is subsequently injected into the ground from rising. Given its poor mechanical strength characteristics, due to its composition, a sheath of this sort is easily fractured by the injection pressure, as a result of which the consolidation cementitious mixture is caused to permeate into the ground under pressure, into the unconsolidated ground which has to be treated.

Consolidation grouting proper takes place through the use of a blocking cursor, known as a "packer" which is inserted into the sleeve pipe down to a particular level, and thus acts as a selector unit so that grouting only takes place through a particular length of pipe, affecting the individual sections defined by the positions of the valves at one time. The packer, in fact, has the function of isolating the sleeve pipe valve by valve, through an upper and a lower seal. The cementitious mixture, fed from outside of the sleeve pipe through a pipe reaching the packer, can flow out from the centre of the packer, in communication with the valve selected from time to time.

US 2010/0006168 discloses a jet-mixing apparatus with a rod provided at its lower end with a first jet nozzle section for jetting ground improvement medium and a second jet nozzle section for jetting reactant.

The use of sleeve pipes according to the known art is complex and costly, particularly during the stage of consolidation grouting, which requires the use of a packer. Manoeuvring the packer in fact requires considerable ability on the part of the operator, in addition to representing a significant proportion of the time required for carrying out grouting work. The packer must in fact be positioned at the selected height in each sleeve pipe on every occasion, and then has to be moved to another height after the cementitious consolidation mixture has been injected. It may even be necessary to completely pull the packer in order to wash it between grouting one level and another. In adverse circumstances, which unfortunately are not rare, it may happen that the packer will jam within the sleeve pipe, with the consequent onerous necessity of repeating the grouting operations from the outset, after drilling a new hole in the ground and inserting a new sleeve pipe.

The object of this invention is to overcome all the problems in the known art, and in particular that of providing devices, equipment and methods for the consolidation of ground which are fast, reliable, simple and effective, which reduce the use of specialist labour and which provide consolidation results which are comparable to those known.

In order to accomplish this and other objects which will,be obvious to a person skilled in the art reading this description, the invention relates to the devices, equipment and methods defined in the appended claims.

According to a first aspect of the invention a device for the treatment of ground, structures and the like by grouting comprises a tubular body which extends in a longitudinal direction. The tubular body is provided with a plurality of injection conduits extending in a longitudinal direction. Along each injection conduit there are one or more openings opening outside the tubular body each located in a position along the longitudinal direction which differs from the positions of one or more openings along the longitudinal direction made along each other injection conduit. By feeding a treatment mixture, for example a cementitious or chemical mixture, in succession or in an ordered sequence, into the various injection conduits in the tubular body the treatment can be injected along the desired length of a hole made in a material requiring treatment into which the treatment device is inserted along the longitudinal direction of the tubular body provided with openings distributed at different lengths along it.

The injection conduits of the tubular body are preferably substantially straight, for more convenient manufacture, and to allow fluid flow of the treatment mixture.

According to a particular aspect the treatment device for grouting preferably comprises a central filling conduit about which there is located a plurality of injection conduits. The central filling conduit is provided with an opening located substantially at a distal end of the tubular body.

Advantageously the injection conduits of the tubular body may be made in the thickness of the wall of the central filling conduit.

The central filling conduit preferably has a transverse cross-section of area greater than or equal to the transverse cross-section of each of the injection conduits.

According to another aspect of the treatment device, non-return valves are located at each of the openings opening onto the outside of the tubular body.

Preferably at least one of the non-return valves comprises two annular bodies bounding an annular chamber into which the opening opens. The annular chamber is covered by a flexible valve body provided with valve nozzles distributed along the periphery of the tubular body.

It is possible that at least one of the non-return valves is a sleeve valve of the conventional type.

In the device for treatment by grouting the tubular body may be made of many pieces which may be connected in series in order to achieve a desired length.

The invention also relates to treatment equipment for the grouting of ground, structures and the like which includes a plurality of the treatment devices. The equipment also comprises at least one feed distributor member with one or more first feed inlets and a plurality of outlets. Each outlet is connected to one feed tube which ends in a distribution attachment which can be selectively coupled to one end of the tubular body of each of the treatment devices in such a way that each of the outlets is in communication with a corresponding injection conduit through the respective feed tube.

Advantageously the treatment equipment is provided with a second feed inlet which communicates with an outlet connected to a feed tube of the central filling conduit of the treatment devices.

According to another particular aspect the feed distributor member of the treatment equipment comprises two portions which can move selectively one with respect to the other in order to reach predetermined selective feed positions. The one or more feed inlets are therefore correspondingly placed in communication with only an identical number of outlets and consequently with only an identical number of injection conduits of the treatment devices.

The invention also relates to a process for the treatment of ground, structures and the like by grouting which comprises the following stages:
- drilling a plurality of holes in a material requiring treatment;
- inserting a corresponding tubular body of a treatment device of the type mentioned above in each hole;
- fixing the tubular body in the hole;
- feeding a treatment mixture to each injection conduit until it emerges from the corresponding one or more openings opening towards the outside of the tubular body in such a way as to treat the material requiring treatment in different predetermined positions along the longitudinal direction of the tubular body corresponding to the different positions of the openings associated with the corresponding injection conduits along the longitudinal direction.

The treatment mixture may be fed to each injection conduit in a progressive way, in succession or in an ordered sequence, to individual injection conduits or groups of individual injection conduits.

Further features and advantages will be apparent from the detailed description of a preferred embodiment which follows, provided by way of a non-limiting example with reference to the merely exemplary appended drawings in which:
- Figure 1 is a longitudinal cross-section of a length of sleeve pipe according to this invention, inserted into a hole in ground requiring consolidation;
- Figure 2 is a transverse cross-section of the sleeve pipe along the line II-II in Figure 1;
- Figures 3 and 4 are transverse cross-sections of variants of the sleeve pipe in Figure 2;
- Figure 5 is a cross-section of a variant of the sleeve pipe according to this invention;
- Figure 6 is a detailed cross-section of a valve of the sleeve pipe according to the invention;
- Figure 7 is a longitudinal cross-section of a distribution head for the sleeve pipe according to the invention;
- Figures 8, 9 and 10 are transverse cross-sections respectively along the lines VIII-VIII, IX-IX and X-X in Figure 7;
- Figure 11 is a diagrammatical view of the system feeding the cementitious mixture to the sleeve pipe according to this invention;
- Figure 12 is a side view of a feed distributor;
- Figure 13 is a cross-section of the feed distributor in Figure 12;
- Figure 14 is a plan view of the feed distributor in Figure 12.

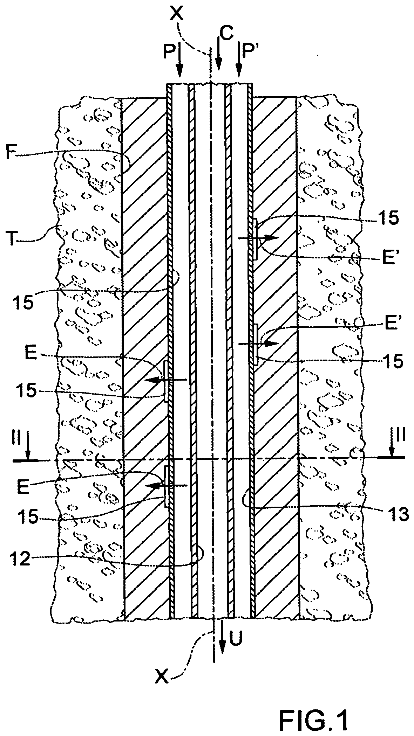

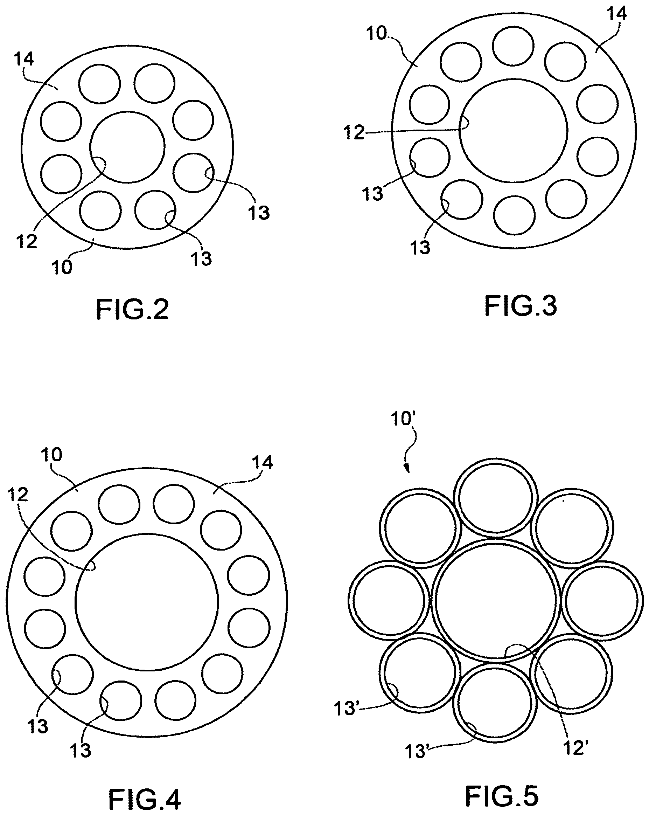

With reference now to Figures 1 and 2, a sleeve pipe 10 according to this invention extends along a substantially longitudinal straight direction X-X after being inserted into a hole F which has previously been made in ground T requiring consolidation. As indicated above, hole F may also be drilled in a material requiring treatment which is not ground, for example rock, or a structure such as for example masonry and the like. In addition to this, the treatment may comprise consolidation and/or waterproofing of the material requiring treatment, and may use appropriate cementitious and/or chemical mixtures for the purpose. For simplicity of description we will refer below, although without limitation, to the consolidation of a ground T using a cementitious mixture.

A central conduit 12, preferably but not restricted to being cylindrical, surrounded by a plurality of peripheral conduits 13, preferably but not restricted to being cylindrical and having a transverse cross-sectional area which is preferably but not restrictively less than that of central conduit 12, is located along the length of longitudinal direction X-X in sleeve pipe 10. In the example in Figure 2, peripheral conduits 13 are eight in number and are provided in the thickness of wall 14 of central conduit 12. Sleeve pipe 10 may, for example, be made of thermoplastics material, and in this case, peripheral conduits 13 and central conduit 12 may be obtained by an extrusion process. Sleeve pipe 10 may also be manufactured of FRP material (fibre reinforced plastic, for example glass-reinforced plastic), in which case peripheral conduits 13 may be obtained by inserting a series of tubes which have been previously extruded or obtained by other means into the thickness of wall 14 of central FRP conduit 12.

The thickness of wall 14 of central conduit 12, which is sufficient to withstand the injection pressures of the cementitious mixture, is also sufficiently thick to contain peripheral conduits 13 of suitable cross-section. Of course many variants of the configuration illustrated in Figures 1 and 2 are possible, for example through constructing sleeve pipes with a different number of peripheral conduits 13, such as is illustrated in Figure 3 and 4, which respectively illustrate ten and twelve peripheral conduits 13, surrounding the corresponding central conduits 12. It is also possible to construct a sleeve pipe 10' according to this invention through assembling prefabricated tubes, as illustrated in the example Figure 5, in which a plurality of tubes forming peripheral conduits 13', for example but not restricted to glass fibre reinforced plastics, are attached around the outer lateral surface of a central tube, forming a central conduit 12', which is also of glass-reinforced plastics, through known methods of attachment, for example by welding, adhesive bonding or mechanical tightening or the like. Also the shape of central conduits 12, 12' and peripheral conduits 13, 13' is not restricted to a cylindrical shape of circular cross-section, but may be of a different type, for example oval, square, or of any other shape. In particular the shape of peripheral conduits 13 may be such as to optimise the occupation of space and the distribution of conduits in the thickness of wall 14 of central conduit 12.

As will be seen in Figure 1, outflow valves 15, spaced apart from one another on peripheral conduit 13 in relation to an adjacent peripheral conduit 13 along the length of sleeve pipe 10 in the X-X direction, are located on each peripheral conduit 13. In other words, holes allowing outlet flow, restricted by non-return valves located at different heights on each peripheral conduit 13 are provided on each peripheral conduit 13. The cementitious mixture injected into a specific peripheral conduit 13, for example along the arrows P, P' in Figure 1, can therefore escape outwards through corresponding valves 15, in the direction of corresponding arrows E, E', at different distances along the X-X direction. For this purpose peripheral conduits 13 are closed off at the bottom in such a way that the mixture is forced to leave through the corresponding radial outflow holes made at the preselected height. Peripheral conduits 13 may also not all be of the same length, given that the length downstream of the outflow holes is not functionally active.

Central conduit 12 has an opening only at the bottom (not illustrated in the figure) in such a way that cementitious mixture can be injected in the direction of arrow C and it can escape from the base of the sleeve pipe (arrow U) in order to then occupy the space between sleeve pipe 10 and wall of hole F in such a way as to form the known sealing sheath in conventional sleeve pipe applications.

Sleeve pipe 10 may comprise a single piece, or may be manufactured as several joinable pieces which can be connected in series to achieve a desired length.

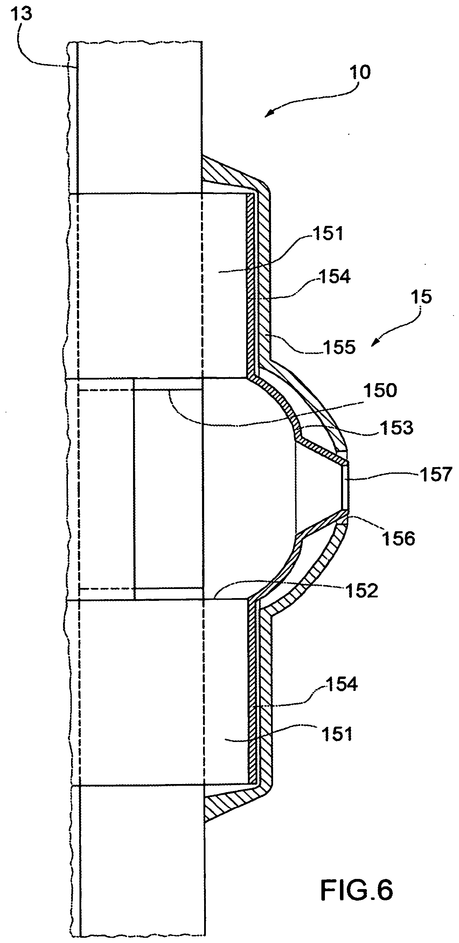

Figure 6 illustrates diagrammatically on a magnified scale an embodiment of non-return valve 15 which is suitable for use in sleeve pipe 10 according to this invention. Non-return valve 15 is located opposite an opening 150 made in the wall of one of peripheral conduits 13 of sleeve pipe 10. Two annular sleeves 151 seal sleeve pipe 10 on two sides (upper and lower in Figure 6) of opening 150, leaving an open annular chamber 152 of sleeve valve 10 in which opening 150 is made between them. Annular chamber 152 is covered by an annular cap 153 of the valve, preferably made of flexible but not too yielding material, for example rubber or plastics. On the two sides of annular cap 153 there extend annular lips 154 which are pressed on each of the two annular sleeves 151 respectively by an annular tightening belt 155, provided with regularly spaced holes 156, from which corresponding valve nozzles 157, which are of one piece with annular cap 153, open out and are provided with notches which open under a pressure exerted from the concave part of annular cap 153 and which close again, thanks to the flexibility of the material, when the pressure ceases. The cementitious mixture, which is fed into a peripheral conduit 13 is capable of flowing out of opening 150 and becoming distributed in annular chamber 152, which surrounds the outer sleeve of sleeve pipe 10. The cementitious mixture can then leave valve nozzles 157 distributed around the periphery, so as to penetrate the ground in multiple radial directions with respect to the plane of the cross-section of sleeve pipe 10, at the predetermined height at which non-return valve 15 is located.

Of course, one or more non-return valves 15 may be of the conventional type, for example of the "sleeve" type and/or any other type having a similar function, for example a "leaf", "flap" or "disc" type valve.

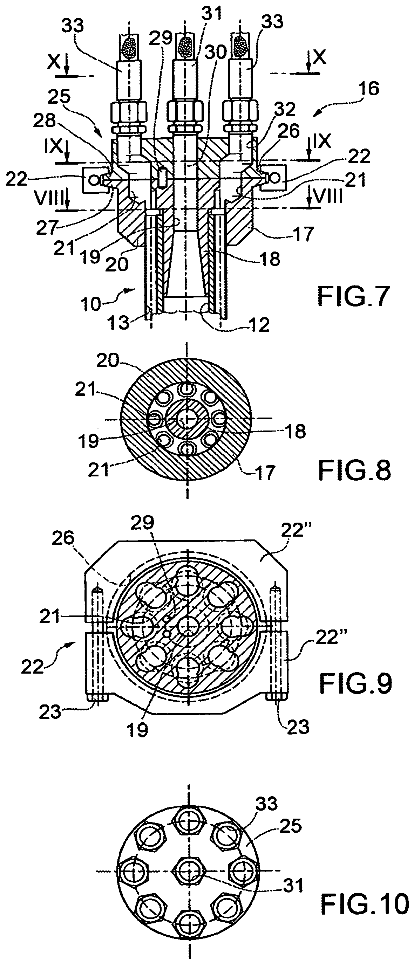

Distribution head 16, illustrated by way of example in Figures 7 to 10, is fitted to the top of sleeve pipe 10, 10' according to this invention, so that mixture can be injected within it. Distribution head 16 comprises a distribution body 17 with a central tubular appendage 18, which is inserted into central conduit 12, so as to place it in communication with a central passage 19. An annular appendage 20 from distribution body 17 surrounds the end of sleeve pipe 10 laterally and provides a seal. A plurality of peripheral passages 21, each in communication with a corresponding peripheral conduit 13 of sleeve pipe 10 is provided in distribution body 17. Distribution body 17 is attached to the end of sleeve 10, for example by adhesive bonding, gluing, force fitting, mechanical attachment, or other known means within the scope of those skilled in the art.

A distribution attachment 25 is removably attached to a distribution body 17, for example, by means of a collar 22, made in two portions 22', 22", which can be tightened together through tightening bolts 23. The two portions 22', 22" of collar 22 each have a wedge-shaped groove 26, which tightens together two matching annular appendages 27, 28, made in distribution body 17 and on distribution attachment 25 respectively. One or more register pins 29 allow distribution attachment 25 to be attached to distribution body 17 in a predetermined angular position for reasons which will be better described below.

The central entry conduit 30, communicating with the central passage 19 of distribution body 17 and therefore with the central conduit 12 of sleeve pipe 10, passes through distribution attachment 25. The proximal end of central feed tube 31 is attached to central inlet conduit 30 by means of a connection of a known type, for example a screw inlet connector. The plurality of peripheral inlet conduits 32, each of which communicates with a corresponding peripheral passage 21 of distribution body 17, and therefore, with the respective peripheral conduit 13 of sleeve pipe 10, also passes through distribution attachment 25. The proximal end of a corresponding feed tube 33 is also attached at each peripheral inlet conduit 32, again in this case by means of a connection of a known type, for example a screw inlet connector.

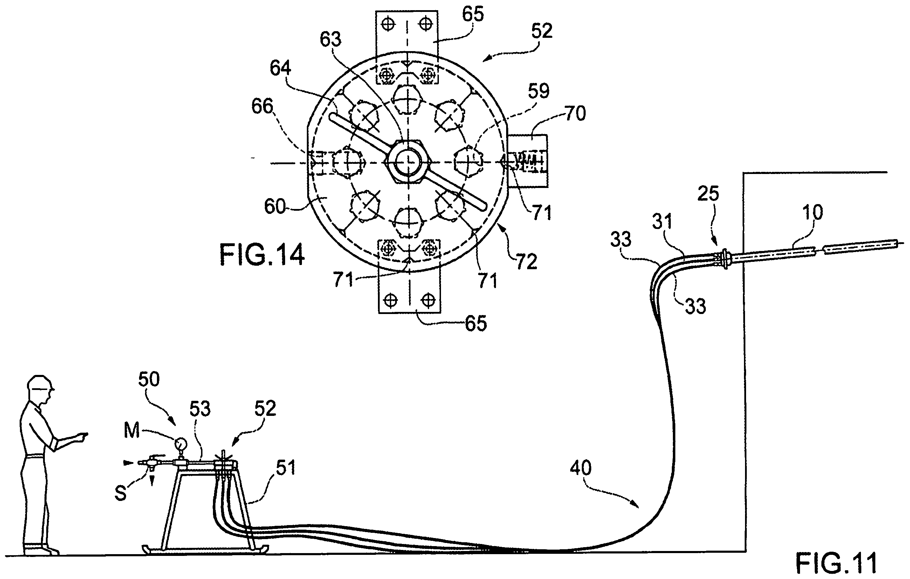

As may be seen in the diagrammatical illustration in Figure 11, central feed tube 31 and peripheral feed tubes 33 attached to distribution attachment 25, mounted on a sleeve pipe 10 extend, preferably grouped together as a bundle 40, down to a remote feed station 50. The length of tube bundle 40 may preferably but not restrictively reach a length of even some 100 metres. The specific configuration of remote feed station 50 illustrated in Figure 11 is provided purely by way of example in order that the principle of the invention may be understood, and may also differ from what is illustrated. It may in fact be of the automatic or semi-automatic type, and may possibly be incorporated into a more complex system for the production and/or feed of cementitious mixtures.

In a simpler form illustrated in Figure 11, remote feed station 50 comprises a supporting frame 51, for example a metal bench or the like, to which a feed distributor 52 is attached by welding, and to which a cementitious mixture may be selectively fed through a feed conduit 53, mounted downstream with a tank (not illustrated).

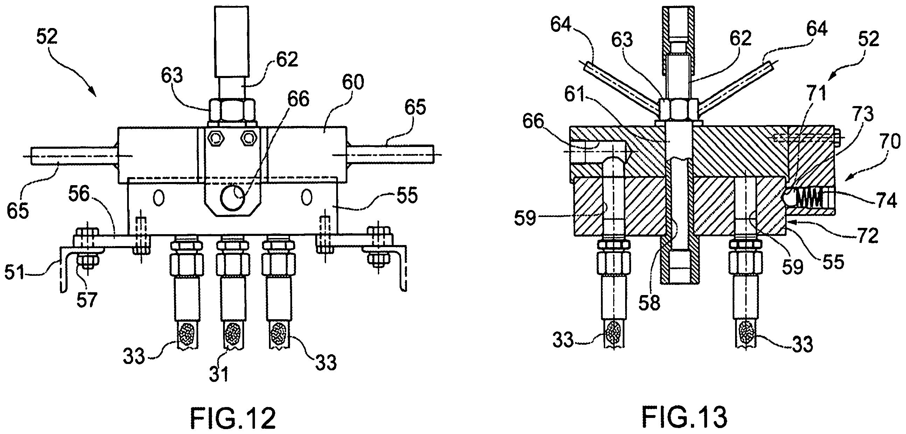

As may better be seen in Figures 12 and 13, remote feed distributor 52 comprises a fixed portion 55, stably immobilised on support 51, for example by means of rods 56 or bolts 57, or other systems of a functionally similar type, to which the distal ends of peripheral feed tubes 33 and central feed tube 31 are connected, again in this case by means of connections of a known type, for example screw inlet connectors. As may be seen in the cross-section in Figure 13, a central channel 58 and a plurality of peripheral channels 59, communicating respectively with central feed tube 31 and each of peripheral feed tubes 33, cross fixed portion 55 of feed distributor 52.

A movable portion 60, rotatably connected to fixed portion 55 through a centrally rotating tubular pin 61, the tubular cavity of which acts as a central communication channel with central feed tube 31, is mounted on fixed portion 55 of feed distributor 52. An upper length 62 of tubular pin 61 projects upwards from movable portion 60 and has an external thread in such a way as to engage the thread of a tightening nut 63, provided with operating handles 64, which allow an operator to selectively block and release movable portion 60 and fixed portion 55. A cementitious mixture feed pipe can be attached to the upper end of tubular pin 61 and passing through central tube 31 may reach central conduit 12 of sleeve pipe 10 to which distribution head 16 is connected.

Movable portion 60 may be immobilised on fixed portion 55 in any desired angular position selected from a plurality of predetermined angular positions corresponding to the number of peripheral channels 59 in fixed portion 55, communicating with peripheral tubes 33 and, specifically, with each of peripheral conduits 13 of sleeve pipe 10, to which distribution head 16 is connected. Manual rotation of movable portion 60 is made easier through manoeuvring handles 65, which project from its sides. Of course, it is possible to provide an automatic or semi-automatic movement system, for example assisted by servomotors or the like.

A single eccentric peripheral conduit 66, which preferably opens out onto the side of movable portion 60, and to which cementitious mixture feed conduit 53 is connected, as illustrated in Figure 11, is provided in movable portion 60, to perform consolidation grouting proper of the ground. In each of the predetermined angular positions in which movable portion 60 may be immobilised on fixed portion 55 eccentric peripheral conduit 66 is in communication with only one corresponding peripheral channel 59 of fixed portion 55, and therefore, specifically to just one corresponding peripheral conduit 13 of sleeve pipe 10 through a corresponding peripheral tube 33. In this way, according to the position adopted by movable portion 60 with respect to fixed portion 55 of feed distributor 52, cementitious mixture from be fed from a remote station to a corresponding peripheral conduit 13 in the sleeve pipe, to which feed head 16 is attached. Because each peripheral conduit is provided by vent valves located at predetermined heights which are separate from each other along the longitudinal direction X-X of sleeve pipe 10 it is specifically possible to remotely inject cementitious consolidation grout at a particular level in ground T which has to be consolidated.

It is also possible to provide more than one mixture feed inlet, for example a group of two, three, four or more peripheral conduits which are functionally similar to eccentric peripheral conduit 66, which feed only an identical number, that is two, three, four or more, corresponding peripheral channels 59 in fixed portion 55, and therefore specifically only an identical number (two, three, four or more) corresponding peripheral conduits 13 of sleeve pipe 10 through an identical number of corresponding peripheral tubes 33. In this way, depending upon the position adopted by moving portion 60 with respect to fixed portion 55 of feed distributor 52 it is possible to feed cementitious mixture from a remote location to a group of corresponding peripheral conduits 13 in the sleeve pipe to which feed head 16 is attached all at the same time.

An angular positioning member 70 is preferably provided to ensure that movable portion 60 is correctly angularly positioned with respect to fixed portion 55 of feed distributor 52 and this, in the preferred but not restricted embodiment illustrated in Figure 13, may comprise a plurality of register recesses 71 made on peripheral wall 72 of fixed portion 55, each corresponding to a peripheral channel 59, in which, for example, there may be snap-fitted a sphere 73, pressed by a spring 74 and drawn in rotation by moving portion 60. On reaching each predetermined angular position the sphere is pressed into one of register recesses 71, indicating to the operator that one of the permitted angular positions has been reached.

The feed system also comprises identification of a first among the peripheral conduits to which the cementitious mixture is fed, so that correct feed to the desired peripheral conduit, provided with non-return valves at the required height, can be recognised remotely. In particular, as has already been seen previously, the attachment of distributor 25 may be mounted on distribution body 17 of the sleeve pipe 10 in a single predetermined angular position, thanks to one or more register pins 29. In this way it is certain that when distribution attachment 25 is moved from one sleeve pipe to another there will always be one predetermined angular position which substantially identifies the angular distribution of peripheral conduits 13 in the sleeve vale, and therefore the various heights at which corresponding non-return valves 15 are positioned. For clarity a first tube and conduit or several tubes and conduits, and in the limit, all the feed tubes and conduits, may be numbered or coloured in order to distinguish them from each other. In the simplest case one of peripheral feed tubes 33 may be marked in such a way as to distinguish it from the others, for example by colouring it red or another prominent colour. In this way the angular position of movable portion 60 with respect to fixed portion 55 will be immediately obvious to an operator, who can recognise the corresponding feed of cementitious mixture through feed conduit 53 and feed distributor 52 in a preordained sequence to sleeve pipe 10, to which distribution attachment 25 is attached at that time.

Of course, the example in the figures relates to the connection of just one feed distributor to just one corresponding sleeve pipe. In practice, to accelerate ground grouting and consolidation times it may obviously be possible to have a plurality of remote feed distributors, each connected to one corresponding sleeve pipe.

In order to consolidate ground by grouting according to this invention, and in particular to consolidate ground which is predominantly unconsolidated or loose, a plurality holes F are first drilled in the ground in a known way, distributed and at distances from each other in accordance with design and the results of the design calculations normally made in the industry.

As is known, holes F in ground T are larger in diameter than sleeve pipes 10, so that the latter can easily be placed in holes F, even down to great depths, in order to reach which it is possible to provide for a system of joints between two or more sleeve pipes in series, in which communication is guaranteed between central conduits 12 and peripheral conduits 13 in a predetermined relative angular position.

Once sleeve pipes 10 have been positioned in holes F, they are first of all fixed in holes F by filling the space between sleeve pipe 10 and the wall of hole F with a known cementitious mixture, fed under pressure through central conduit 12 of each sleeve pipe 10. The cementitious mixture flows along the entire length of central conduit 12, entering it as indicated at arrow C in Figure 1, and leaving it at the opposite end, as indicated by arrow U, thus progressively filling all the space between sleeve pipe 10 and the wall of hole F, from the bottom of hole F.

In this preliminary filling, distribution head 16 is mounted on sleeve pipe 10, and in particular, distribution attachment 25 is secured to distribution body 17, attached to the head of sleeve pipe 10. From remote station 50 an operator can connect the feed of cementitious mixture to the upper length 62 of tubular pin 61, which projects upwards from movable portion 60 of feed distributor 52.
The pressurised cementitious mixture therefore flows along central feed tube 31 and reaches distribution head 16, to then fill central conduit 12 of sleeve pipe 10. The wide cross-sections of the central tubes and conduits make it possible for the cementitious mixture to be fed with a relatively high flow, and thus allow the space between sleeve pipe 10 and the walls of corresponding hole F to be filled in correspondingly short times.

In order to proceed with consolidation grouting proper, a known cementitious mixture is fed to sleeve pipe 10, connected to remote station 50 via distribution head 16. In particular, an operator (or as an alternative an automatic or semi-automatic system) rotates the movable portion 60 of feed distributor 52 with respect to its fixed portion 55, placing the single eccentric conduit 66 of movable portion 60 in alignment and communication with a predetermined peripheral channel 59 in fixed portion 55, with the assistance of the numbering or identification of positions described above. Injection of the cementitious mixture into single eccentric conduit 66 results in corresponding feed of the cementitious mixture to peripheral channel 59, aligned therewith, until it reaches corresponding peripheral conduit 13 in sleeve pipe 10, from which the cementitious mixture flows out through valve or valves 15, located at a particular height along the sleeve pipe in longitudinal direction X-X. The pressure of the cementitious mixture in the conduits, which can be monitored, for example, by a pressure gauge M, which can be seen by the operator at remote station 50, determines the opening of valve or valves 15 and injection of the cementitious mixture into the surrounding area, achieving the objectives and consolidation functions known in the art, but much more quickly, with a safer process, greater convenience in use and certainty of result.

Once injection of cementitious mixture into a peripheral conduit 13 is complete, indicated, for example, by reaching a particular pressure in the conduits, as indicated by pressure gauge M, the operator first of all releases the pressure by opening a tap or discharge deviator S from an injection position to a vent position. The operator then slackens nut 63 of feed distributor 52 by acting on handles 64. Once movable portion 60 has been slackened off from fixed portion 55 the operator can rotate movable portion 60 into a different, preferably subsequent, angular position, indicated by the click of mechanism 70. On reaching this position individual eccentric conduit 66 is in line and in communication with a different, preferably subsequent peripheral channel 59, and then with a corresponding peripheral conduit 13 in sleeve pipe 10, fitted with valves 15, located at a different height along the X-X direction in comparison with valves 15 used in the previous stage of grouting, through previous peripheral conduit 13 in the previous angular position of movable portion 60 via corresponding peripheral tube 33.

Feeding cementitious mixture in succession or in an ordered sequence to the various peripheral conduits 13 of the sleeve pipe makes it possible to provide consolidation grouting along the entire desired length of hole F, in the longitudinal direction X-X of sleeve pipe 10 provided with valves 15 distributed at different heights along it.

A number of distribution attachments 25, separately fed each by its own distribution feeder 52, or even fed in parallel by the same distribution feeder, can be provided in order to inject cementitious mixture into the various sleeve pipes 10. Once injection of cementitious mixture into one or more sleeve pipes 10 is complete, the corresponding distribution attachments 25 can be detached from already used sleeve pipes 10 and reattached to new sleeve pipes 10, in which the stages of filling and injection of the ground consolidation cementitious mixture proceed.

Of course, without altering the principle of the invention, the nature of its implementation and details of construction may be varied widely in comparison with what has been described and illustrated without thereby going beyond the scope of this invention.

## Claims

1. A device for the treatment of ground, structures and the like by grouting, comprising a tubular body (10) extending in a longitudinal direction (X-X), provided with a plurality of injection conduits (13) extending in that longitudinal direction (X-X), each having a transverse cross-sectional area which is less than that of a central filling conduit (12), one or more openings (150) opening outwards from the tubular body (10) being located along each injection conduit (13) and being located each in a position along the longitudinal direction (X-X) which is different from the position along that longitudinal direction (X-X) of the one or more openings (150) made along each other injection conduit (13).

2. A device for treatment by grouting according to claim 1, in which the injection conduits (13) are substantially straight.

3. A device for treatment by grouting according to claim 1 or 2, wherein a plurality of injection conduits (13) are located around the central filling conduit (12) which is provided with an opening substantially located at the end of the tubular body (10).

4. A device for treatment by grouting according to claim 3, in which the injection conduits are made in the thickness of the wall of the central filling conduit (12).

5. A device for treatment by grouting according to claim 3 or 4, in which the central filling conduit (12) has a transverse cross-section of area greater than or equal to the area of the transverse cross-section of each of the injection conduits (13).

6. A device for treatment by grouting according to any one of the preceding claims, comprising a plurality of non-return valves (15), each located at the location of each of the openings (150) opening outward from the tubular body (10).

7. A device for treatment by grouting according to claim 6, in which at least one non-return valve (15) comprises two annular bodies (151), delimiting an annular chamber (152) into which the opening (150) opens, governed by a flexible valve member (153) provided with valve nozzles (157) distributed along the periphery of the tubular body (10).

8. A device for treatment by injection according to any one of the preceding claims, in which the tubular body (10) is made of a number of pieces which may be connected in series in order to obtain a desired length.

9. Equipment for the treatment of ground, structures and the like by grouting, including a plurality of consolidation devices according to any one of the claims 1 to 8, further comprising at least one feed distributor member (52) with one or more first feed inlets (66) and a plurality of outlets connected to a feed tube (33), ending in a distribution attachment (25), which can be selectively coupled to one end of the tubular body (10) of each of the consolidation devices in such a way that each of the outlets is in communication with a corresponding injection conduit (13) through the corresponding feed tube.

10. Treatment equipment according to claim 9, including a plurality of treatment devices according to any one of claims 3 to 8, provided with a second feed inlet (62) communicating with an outlet connected to a feed tube for the central filling conduit (12).

11. Treatment equipment according to claim 9 or 10, in which the feed distributor member (52) comprises two portions which can move selectively, one with respect to the other, to each predetermined selected feed position, in which the one or more first feed inlets are located correspondingly in communication with only an identical number of outlets of the outlets and consequently with only an identical number of injection conduits (13).

12. A process for the treatment of ground, structures and the like by grouting, comprising the stages of:
- providing a plurality of holes (F) in a material requiring treatment;
- inserting into each hole (F) a corresponding tubular body (10) of a treatment device comprising a tubular body (10) extending in a longitudinal direction (X-X), provided with a plurality of injection conduits (13) extending in that longitudinal direction (X-X), one or more openings (150) opening outwards from the tubular body (10) being located along each injection conduit (13) and being located each in a position along the longitudinal direction (X-X) which is different from the position along that longitudinal direction (X-X) of the one or more openings (150) made along each other injection conduit (13);
- fixing the tubular body (10) in the hole (F) by filling the space between the sleeve pipe (10) and the wall of hole (F);
- feeding a treatment mixture in succession or in an ordered sequence to each injection conduit (13) until it escapes from the corresponding one or more openings (150) opening outwards from the tubular body (10) in such a way as to treat the material which has to be treated in different positions along the longitudinal direction (X-X) of the tubular body (10) corresponding to the different positions of the openings (150) associated with the corresponding injection conduits (139) along the longitudinal direction (X-X).

13. A treatment process according to claim 12, in which the treatment mixture is fed to each injection conduit (13) progressively, in succession or in an ordered sequence, to individual injection conduits (13) or groups of individual injection conduits (13).

14. A treatment process according to claim 12 or 13, in which a cementitious mixture for fixing the tubular body (10) in the hole (F) flows along the entire length of a central filling conduit (12) provided with an opening substantially located at the end of the tubular body (10), leaving it at its end, thus progressively filling all the space between sleeve pipe (10) and the wall of the hole (F), from the bottom of the hole (F).

## Patentansprüche

1. Vorrichtung zur Behandlung von Boden, Konstruktionen und dergleichen durch Verpressen, die einen sich in einer Längsrichtung (X-X) erstreckenden rohrförmigen Körper (10) aufweist, der eine Vielzahl von Einspritzkanälen (13) umfasst, die sich in der Längsrichtung (X-X) erstrecken, wobei jeder Einspritzkanal eine querverlaufende Querschnittsfläche aufweist, die kleiner ist als diejenige eines mittigen Füllkanals (12), wobei eine oder mehrere Öffnungen (150), die sich von dem rohrförmigen Körper (10) nach außen öffnen, entlang jeden Einspritzkanals (13) angeordnet sind und jede in einer Position entlang der Längsrichtung (X-X) angeordnet ist, die unterschiedlich ist von der Position entlang dieser Längsrichtung (X-X) der einen oder mehreren Öffnungen (150), die entlang jeden anderen Einspritzkanals (13) ausgebildet sind.

2. Vorrichtung zur Behandlung durch Verpressen nach Anspruch 1, wobei die Einspritzkanäle (13) im Wesentlichen gerade ausgebildet sind.

3. Vorrichtung zur Behandlung durch Verpressen nach Anspruch 1 oder 2, wobei eine Vielzahl von Einspritzkanälen (13) um den mittigen Füllkanal (12) herum angeordnet ist, der mit einer Öffnung versehen ist, die im Wesentlichen am Ende des rohrförmigen Körpers (10) angeordnet ist.

4. Vorrichtung zur Behandlung durch Verpressen nach Anspruch 3, wobei die Einspritzkanäle in der Wanddicke des mittigen Füllkanals (12) ausgebildet sind.

5. Vorrichtung zur Behandlung durch Verpressen nach Anspruch 3 oder 4, wobei der mittige Füllkanal (12) einen transversalen Querschnitt einer Fläche aufweist, die größer oder gleich der Fläche des transversalen Querschnitts jedes der Einspritzkanäle (13) ist.

6. Vorrichtung zur Behandlung durch Verpressen nach einem der vorangehenden Ansprüche, wobei die Vorrichtung eine Mehrzahl von Rückschlagventilen (15) aufweist, von denen jedes am Ort einer der Öffnungen (150) angeordnet ist, die sich von dem rohrförmigen Körper (10) nach außen öffnen.

7. Vorrichtung zur Behandlung durch Verpressen nach Anspruch 6, wobei mindestens ein Rückschlagventil (15) zwei ringförmige Körper (151) aufweist, die eine ringförmige Kammer (152) begrenzen, in die die Öffnung (150) sich öffnet, gesteuert durch ein flexibles Ventilteil (153), das mit Ventildüsen (157) versehen ist, die entlang des Umfangs des rohrförmigen Körpers (10) angeordnet sind.

8. Vorrichtung zur Behandlung durch Einspritzung nach einem der vorangehenden Ansprüche, wobei der rohrförmige Körper (10) aus einer Anzahl von Teilen besteht, die in Reihe verbindbar sind, um eine gewünschte Länge zu erhalten.

9. Ausrüstung zur Behandlung von Boden, Konstruktionen und dergleichen durch Verpressen, die eine Mehrzahl von Verdichtungsvorrichtungen nach einem der Ansprüche 1 bis 8 aufweist, wobei die Ausrüstung des Weiteren mindestens ein Versorgungs-Verteilungsteil (52) mit einem oder mehreren ersten Versorgungs-Einlässen (66) und einer Mehrzahl von Auslässen aufweist, die mit einer Versorgungsröhre (33) verbunden sind, die in einem Verteilungs-Anschluss (25) endet, der selektiv mit einem Ende des rohrförmigen Körpers (10) jedes der Verdichtungsvorrichtungen derart verbindbar ist, dass jeder der Auslässe durch die entsprechende Versorgungsröhre in Verbindung mit einem entsprechenden Einspritzkanal (13) steht.

10. Behandlungsausrüstung nach Anspruch 9, die eine Vielzahl von Behandlungsvorrichtungen nach einem der Ansprüche 3-8 aufweist, die mit einem zweiten Versorgung-Einlass (62) versehen ist, der mit einem Auslass in Verbindung steht, der mit einer Versorgungsröhre für den mittigen Füllkanal (12) verbunden ist.

11. Behandlungsausrüstung nach Anspruch 9 oder 10, wobei das Versorgungs-Verteilungsteil (52) zwei Teile aufweist, die selektiv, einer in Bezug auf den anderen, in eine jeweils vorbestimmte ausgewählte Versorgungsposition bewegbar sind, in der die ein oder mehreren ersten Versorgung-Einlässe so angeordnet sind, dass sie jeweils in Verbindung stehen mit nur einer identischen Anzahl von Auslässen der Auslässe und dementsprechend mit nur einer identischen Anzahl von Einspritzkanälen (13).

12. Verfahren zur Behandlung von Boden, Konstruktionen und dergleichen durch Verpressen, das die Schritte aufweist:
- Bereitstellen einer Vielzahl von Löchern (F) in einem Material, das eine Behandlung benötigt;
- Einführen in jedes Loch (F) einen entsprechenden rohrförmigen Körpers (10) einer Behandlungsvorrichtung, die einen sich in einer Längsrichtung (X-X) erstreckenden rohrförmigen Körper (10) aufweist, der eine Vielzahl von Einspritzkanälen (13) umfasst, die sich in der Längsrichtung (X-X) erstrecken, wobei eine oder mehrere Öffnungen (150), die sich von dem rohrförmigen Körper (10) nach außen öffnen, entlang jeden Einspritzkanals (13) angeordnet sind und jede in einer Position entlang der Längsrichtung (X-X) angeordnet ist, die unterschiedlich ist von der Position entlang dieser Längsrichtung (X-X) der einen oder mehreren Öffnungen (150), die entlang jeden anderen Einspritzkanals (13) ausgebildet sind;
- Befestigen des rohrförmigen Körpers (10) in dem Loch (F) durch Füllen des Raums zwischen dem Hülsenrohr (10) und der Wand des Lochs (F);
- Einspeisen einer Behandlungsmischung nacheinander oder in einer geordneten Reihenfolge in jeden Einspritzkanal (13), bis sie aus den entsprechenden einen oder mehreren Öffnungen (150), die sich von dem rohrförmigen Körper (10) nach außen öffnen, derart austritt, dass das zu behandelnde Material in unterschiedlichen Positionen entlang der Längsrichtung (X-X) des rohrförmigen Körpers (10) behandelt wird, wobei die unterschiedlichen Positionen den unterschiedlichen Positionen der Öffnungen (150), die den entsprechenden Einspritzkanälen (139) entlang der Längsrichtung (X-X) zugeordnet sind, entsprechen.

13. Behandlungsverfahren nach Anspruch 12, wobei die Behandlungsmischung in jeden Einspritzkanal (13) fortschreitend, nacheinander oder in einer geordneten Reihenfolge, in individuelle Einspritzkanäle (13) oder Gruppen von individuellen Einspritzkanälen (13) eingespeist wird.

14. Behandlungsverfahren nach Anspruch 12 oder 13, bei dem eine zementartige Mischung zum Befestigen des rohrförmigen Körpers (10) in dem Loch (F) entlang der gesamten Länge eines mittigen Füllkanals (12) fließt, der mit einer Öffnung versehen ist, die im Wesentlichen am Ende des rohrförmigen Körpers (10) angeordnet ist, an seinem Ende austritt und somit zunehmend den gesamten Raum zwischen dem Hülsenrohr (10) und der Wand des Rohrs (F) vom Boden des Lochs (F) aus füllt.

## Revendications

1. Dispositif pour le traitement du sol, de constructions et similaires par jointoiement, comprenant un corps tubulaire (10) s'étendant dans une direction longitudinale (X-X), pourvu d'une pluralité de conduits d'injection (13) s'étendant dans cette direction longitudinale (X-X), chacun ayant une surface en section transversale qui est inférieure à celle d'un conduit de remplissage central (12), une ou plusieurs ouverture(s) (150) s'ouvrant vers l'extérieur à partir du corps tubulaire (10) étant formée(s) le long de chaque conduit d'injection (13) et étant située(s) chacune dans une position le long de la direction longitudinale (X-X) qui est différente de la position le long de cette direction longitudinale (X-X) de ladite/desdites une ou plusieurs ouverture(s) (150) formée(s) le long de chaque autre conduit d'injection (13).

2. Dispositif de traitement par jointoiement selon la revendication 1, dans lequel les conduits d'injection (13) sont sensiblement droits.

3. Dispositif de traitement par jointoiement selon la revendication 1 ou 2, dans lequel une pluralité de conduits d'injection (13) est disposée autour du conduit de remplissage central (12) qui est pourvu d'une ouverture située sensiblement à l'extrémité du corps tubulaire (10).

4. Dispositif de traitement par jointoiement selon la revendication 3, dans lequel les conduits d'injection sont formés dans l'épaisseur de la paroi du conduit de remplissage central (12).

5. Dispositif de traitement par jointoiement selon la revendication 3 ou 4, dans lequel le conduit de remplissage central (12) présente une section transversale dont la surface est plus grande que ou identique à la surface de la section transversale de chacun des conduits d'injection (13).

6. Dispositif de traitement par jointoiement selon l'une quelconque des revendications précédentes, comprenant une pluralité de clapets antiretour (15), situés chacun à l'endroit de chacune des ouvertures (150) s'ouvrant vers l'extérieur à partir du corps tubulaire (10).

7. Dispositif de traitement par jointoiement selon la revendication 6, dans lequel au moins un clapet antiretour (15) comprend deux corps annulaires (151), qui délimitent une chambre annulaire (152) dans laquelle l'ouverture (150) s'ouvre, régis par un élément de soupape souple (153) pourvu de buses de soupape (157) distribuées le long de la périphérie du corps tubulaire (10).

8. Dispositif de traitement par jointoiement selon l'une quelconque des revendications précédentes, dans lequel le corps tubulaire (10) est constitué d'un certain nombre de pièces qui peuvent être connectées en série dans le but d'obtenir une longueur souhaitée.

9. Equipement pour le traitement du sol, de constructions et similaires, comprenant une pluralité de dispositifs de consolidation selon l'une quelconque des revendications 1 à 8, comprenant en outre au moins un élément de distributeur d'alimentation (52) présentant une ou plusieurs première(s) entrée(s) d'alimentation (66) et une pluralité de sorties connectées à un tube d'alimentation (33), qui se termine en une fixation de distribution (25) qui peut être couplée de façon sélective à une première extrémité du corps tubulaire (10) de chacun des dispositifs de consolidation de telle sorte que chacune des sorties soit en communication avec un conduit d'injection correspondant (13) à travers le tube d'alimentation correspondant.

10. Equipement de traitement selon la revendication 9, comprenant une pluralité de dispositifs de traitement selon l'une quelconque des revendications 3 à 8, présentant une seconde entrée d'alimentation (62) qui communique avec une sortie connectée à un tube d'alimentation pour le conduit de remplissage central (12).

11. Equipement de traitement selon la revendication 9 ou 10, dans lequel l'élément de distributeur d'alimentation (52) comprend deux parties qui peuvent se déplacer de façon sélective, l'une par rapport à l'autre, vers chaque positon d'alimentation sélectionnée prédéterminée, dans lequel la ou les première(s) entrée(s) d'alimentation est (sont) agencée(s) de façon correspondante en communication avec seulement un nombre identique de sorties des sorties et par conséquent avec seulement un nombre identique de conduits d'injection (13).

12. Procédé pour le traitement du sol, de constructions et similaires par jointoiement, comprenant les étapes suivantes:
- pratiquer une pluralité de trous (F) dans un matériau nécessitant un traitement;
- insérer dans chaque trou (F) un corps tubulaire correspondant (10) d'un dispositif de traitement comprenant un corps tubulaire (10) s'étendant dans une direction longitudinale (X-X), pourvu d'une pluralité de conduits d'injection (13) s'étendant dans cette direction longitudinale (X-X), une ou plusieurs ouverture(s) (150) s'ouvrant vers l'extérieur à partir du corps tubulaire (10) étant formée(s) le long de chaque conduit d'injection (13) et étant située(s) chacune dans une position le long de la direction longitudinale (X-X) qui est différente de la position le long de cette direction longitudinale (X-X) de ladite/desdites une ou plusieurs ouverture(s) (150) formée(s) le long de chaque autre conduit d'injection (13) ;
- fixer le corps tubulaire (10) dans le trou (F) en remplissant l'espace entre le manchon tubulaire (10) et la paroi du trou (F) avec un mélange cimentaire ; et
- amener un mélange de traitement de façon successive ou en une séquence ordonnée à chaque conduit d'injection (13) jusqu'à ce qu'il s'échappe de ladite ou desdites une ou plusieurs ouverture(s) correspondante(s) (150) s'ouvrant vers l'extérieur à partir du corps tubulaire (10) de manière à traiter le matériau qui doit être traité dans différentes positions le long de la direction longitudinale (X-X) du corps tubulaire (10) qui correspondent aux différentes positions des ouvertures (150) associées aux conduits d'injection correspondants (139) le long de la direction longitudinale (X-X).

13. Procédé de traitement selon la revendication 12, dans lequel le mélange de traitement est amené à chaque conduit d'injection (13) progressivement, successivement ou dans une séquence ordonnée, à des conduits d'injection individuels (13) ou à des groupes de conduits d'injection (13).

14. Procédé de traitement selon la revendication 12 ou 13, dans lequel le mélange cimentaire pour fixer le corps tubulaire (10) dans le trou (F) s'écoule le long de toute la longueur d'un conduit de remplissage central (12) pourvu d'une ouverture disposée substantiellement à l'extrémité du corps tubulaire (10), en le quittant à son extrémité, pour ainsi remplir progressivement la totalité de l'espace entre le manchon tubulaire (10) et la paroi du trou (F) à partir du fond du trou (F).
